# FASCICULE DE BREVET EUROPEEN

(11) **EP 2 922 262 B1**
(45) Date de publication et mention de la délivrance du brevet: **31.08.2016**
(21) Numéro de dépôt: 14160256.5
(22) Date de dépôt: 17.03.2014
(51) Int. Cl.: H04L 27/227

(54) **CIRCUIT ÉLECTRONIQUE À DÉMODULATEUR SYNCHRONE D'UN SIGNAL À MODULATION DE PHASE**
ELEKTRONISCHE EINRICHTUNG ZUR KOHÄRENTEN DEMODULATION EINES PHASENMODULIERTEN SIGNALS
ELECTRONIC CIRCUIT WITH SYNCHRONOUS DEMODULATOR OF A PHASE-MODULATED SIGNAL

(43) Date de publication de la demande: 23.09.2015
(73) Titulaire: The Swatch Group Research and Development Ltd., 2074 Marin (CH)
(72) Inventeur: Casagrande, Arnaud, 2014 Bôle (CH)
(74) Mandataire: Giraud, Eric

(56) Documents cités:
- US-A1- 2012 076 507
- MINJIAN ZHOO ET AL: "Sampling rate conversion and symbol timing for OFDM software receiver", IEEE INTERNATIONAL CONFERENCE ON COMMUNICATIONS, CIRCUITS AND SYSTEMS AND WEST SINO EXPOSITIONS, vol. 1, 29 juin 2002 (2002-06-29), - 1 juillet 2002 (2002-07-01), pages 114-118, XP010632229, NJ, USA ISBN: 978-0-7803-7547-5

## Description

L'invention concerne un circuit électronique à démodulateur synchrone d'un signal à modulation de phase.

La modulation de phase d'un signal de données à transmettre peut être une modulation numérique de phase de type BPSK (Binary Phase Shift Keying en terminologie anglaise) ou de type QPSK (Quadrature Phase Shift Keying en terminologie anglaise), voire de type OQPSK (Offset Quadrature Phase Shift Keying en terminologie anglaise). Dans le premier cas, la modulation numérique de phase de type BPSK est définie avec deux valeurs ou états de phase avec un déphasage de 180° entre les deux états de phase. Dans le second cas, la modulation numérique de phase de type QPSK est définie avec quatre valeurs ou états de phase avec un déphasage de 90° entre chaque état de phase. Pour cette modulation dans l'émetteur, il est habituellement utilisé deux signaux en quadrature à fréquence porteuse déphasés de 90° l'un de l'autre avant la conversion en fréquence pour la transmission d'un signal modulé QPSK. Dans le troisième cas, la modulation numérique de phase de type OQPSK s'apparente à celle de la modulation numérique de phase de type QPSK, mais qui peut être plus favorable dans le cas de non-linéarités des amplificateurs dans la chaîne de modulation.

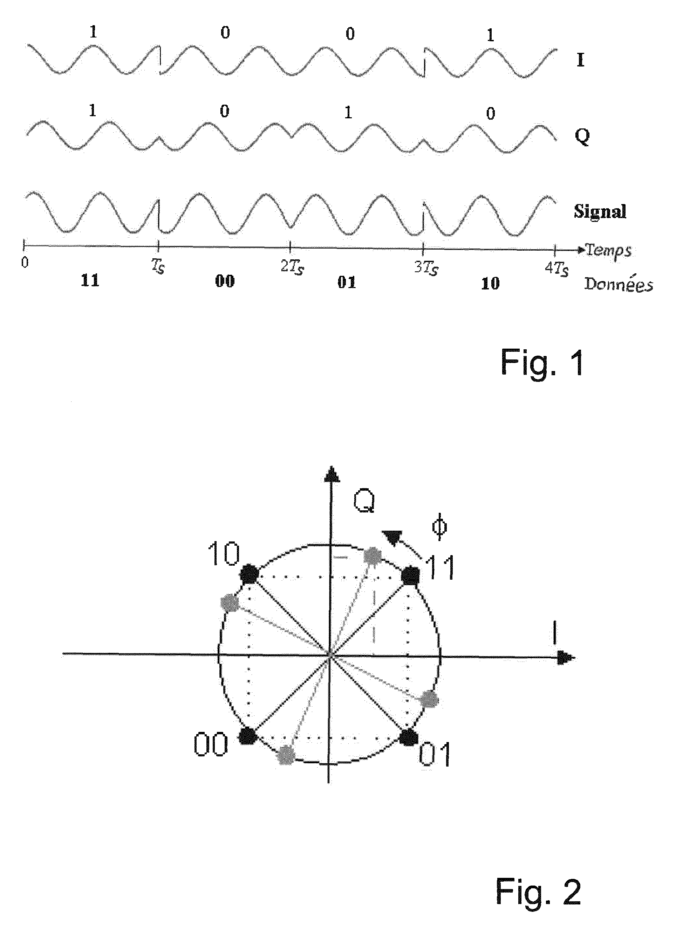

A titre illustratif, un tel signal à modulation de phase de type QPSK est représenté dans le domaine temporel sur la figure 1. Il est montré sur cette figure 1, le codage à 2 bits par modulation de phase d'un signal de données en phase I et d'un signal de données en quadrature Q déphasé de 90° du signal de données en phase I. Pour la transmission d'un signal à modulation de phase, une addition des signaux de données I et Q est effectuée. Le débit de données est défini par 1/Tₛ, où Tₛ est la durée d'un état de codage.

La démodulation d'un tel signal à modulation numérique de phase peut être effectuée de manière synchrone dans un récepteur d'un signal à modulation de phase. La démodulation peut intervenir généralement après au moins une première conversion de fréquence du signal à modulation de phase capté par une antenne du récepteur. Pour pouvoir effectuer la démodulation de phase en mode synchrone, il est nécessaire de reconstruire la fréquence porteuse d'un signal intermédiaire, ou d'un signal capté directement par l'antenne.

Avec la reconstruction de la fréquence porteuse, il est possible d'extraire le signal modulant. Pour ce faire, il est connu d'utiliser une boucle de type Costas pour effectuer cette reconstruction de la fréquence porteuse, afin d'extraire le signal modulant. La démodulation d'un signal à modulation de phase est également expliquée dans l'article intitulé "PSK Demodulation (Part I)" de J. Mark Steber de The Communications Edge de WJ Communications, Inc. révisé en 2001.

Une autre technique utilisant un démodulateur synchrone comprenant une unité à transformée de Fourier pour la démodulation d'un signal à modulation de phase est divulguée dans le brevet US 2012/076507 A1 (ROBERTS KIM B [CA] ET AL, 29 mars 2012).

La figure 2 représente un diagramme ou constellation des états de phase d'un signal à modulation de phase de type QPSK. Les états de phase sont montrés en coordonnées polaires par rapport à un axe réel pour le signal de données en phase I et un axe imaginaire pour le signal de données en quadrature Q. Dans le cas où la fréquence porteuse d'au moins un signal de conversion du circuit électronique n'est pas égale à la fréquence porteuse du signal à modulation de phase à démoduler, il subsiste une erreur de phase Φ. Il est nécessaire de reconstruire exactement cette fréquence porteuse dans le circuit électronique pour pouvoir démoduler le signal à modulation de phase dans une boucle d'asservissement, et de corriger la phase comme expliqué ci-après. Après reconstruction de cette fréquence porteuse, le signal modulant peut être extrait, ce qui correspond aux points 11, 10, 00 ou 01 montrés sur la figure 2.

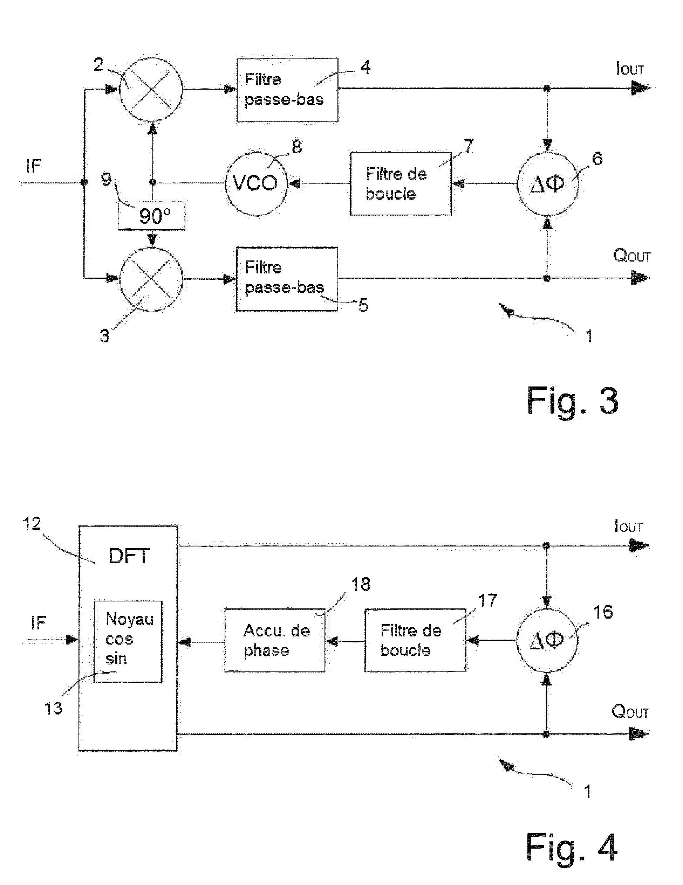

Dans un circuit électronique de démodulation d'un signal à modulation de phase connu comme représenté à la figure 3, le signal à fréquence intermédiaire IF est fourni d'une part à un premier mélangeur de signaux 2 et d'autre part à un second mélangeur de signaux 3. Une conversion de fréquence du signal à fréquence intermédiaire IF est effectuée dans les premier et second mélangeurs 2, 3 avec des signaux oscillants. Un premier signal oscillant non déphasé, qui provient d'un oscillateur commandé en tension VCO 8, est fourni au premier mélangeur 2, et un second signal oscillant, qui est déphasé de 90° dans un déphaseur 9 et qui provient de l'oscillateur VCO 8, est fourni au second mélangeur 3. En sortie du premier mélangeur 2, un signal en bande de base en phase I est fourni, alors qu'en sortie du second mélangeur 3, un signal en bande de base en quadrature Q est fourni. Un filtrage des signaux analogiques en phase et en quadrature est opéré par deux filtres passe-bas 4 et 5 pour la fourniture d'un signal de données en phase I_{OUT} et d'un signal de données en quadrature Q_{OUT}.

Si la phase et la fréquence des signaux oscillants ne sont pas tout à fait égales à la phase et la fréquence de la porteuse du signal intermédiaire IF, il subsiste une erreur de fréquence et de phase. Un comparateur de phase 6 est donc utilisé pour comparer les signaux de données en phase I_{OUT} et en quadrature Q_{OUT}. L'erreur de phase est fournie à travers un filtre de boucle 7, qui est un filtre standard comme un intégrateur, à l'entrée de l'oscillateur commandé en tension 8 dans une boucle de Costas. La réalisation analogique ou digitale de la boucle de Costas implique des filtres passe-bas, qui ont le désavantage de devenir encombrants, lorsque leur fréquence de coupure est faible.

L'invention a donc pour but de fournir un circuit électronique à démodulateur synchrone d'un signal à modulation de phase, permettant d'effectuer une démodulation synchrone des données de manière à réduire la complexité, l'encombrement et la consommation du dispositif habituel.

A cet effet, l'invention concerne un circuit électronique à démodulateur synchrone d'un signal à modulation de phase, qui comprend les caractéristiques mentionnées dans la revendication indépendante 1.

Des formes d'exécution particulières du circuit électronique sont définies dans les revendications dépendantes 2 à 9.

Un avantage du circuit électronique réside dans le fait qu'en lieu et place d'au moins un mélangeur et d'au moins un filtre passe-bas traditionnels, il est prévu une unité à transformée de Fourier discrète, qui combine les opérations de mélange et de filtrage passe-bas. Avec l'unité à transformée de Fourier discrète, il est ainsi possible d'effectuer une démodulation numérique du signal à modulation de phase pour la fourniture d'au moins un signal démodulé, où la fréquence porteuse du signal à modulation de phase a été retirée.

Avantageusement, la transformée de Fourier discrète est effectuée à une fréquence unique, ce qui permet de simplifier la réalisation de filtres numériques dans la boucle d'asservissement du circuit électronique.

Les buts, avantages et caractéristiques du circuit électronique à démodulateur synchrone d'un signal à modulation de phase apparaîtront mieux dans la description suivante sur la base d'au moins une forme d'exécution non limitative et illustrée par les dessins sur lesquels :
la figure 1 déjà citée représente un graphique temporel d'un signal à modulation de phase de type QPSK avec indication du codage obtenu par un signal modulant en phase et un signal modulant en quadrature,
la figure 2 déjà citée représente un diagramme des états de phase en coordonnées polaires d'un signal à modulation de phase de type QPSK,
la figure 3 déjà citée représente de manière simplifiée les composants du circuit électronique à démodulateur synchrone d'un signal à modulation de phase, qui est muni d'une boucle de Costas de l'art antérieur,
la figure 4 représente de manière simplifiée les composants du circuit électronique à démodulateur synchrone d'un signal à modulation de phase de type QPSK selon l'invention, qui est muni d'une boucle numérique de Costas, et
la figure 5 représente de manière simplifiée une forme d'exécution d'un comparateur de phase du circuit électronique de la figure 4 pour comparer le signal démodulé en phase avec le signal démodulé en quadrature selon l'invention.

Dans la description suivante, tous les composants électroniques du circuit électronique à démodulateur synchrone d'un signal à modulation de phase, qui sont bien connus d'un homme du métier dans ce domaine technique, ne sont décrits que de manière simplifiée.

A la figure 4, un circuit électronique 1 muni d'un démodulateur synchrone d'un signal à modulation de phase est représenté. Ce circuit électronique 1 peut faire partie par exemple d'un récepteur d'un signal à modulation de phase ou d'un système de réception et transmission d'un signal à modulation de phase non représentés. Le système de réception et transmission d'un signal à modulation de phase, qui comprend au moins un circuit électronique 1 à démodulateur synchrone, peut être un système à faible débit de données et à haute sensibilité. Des données ou des commandes peuvent être modulées en phase dans le signal à modulation de phase à transmettre et à recevoir.

Le circuit électronique 1 comprend une unité à transformée de Fourier discrète définie DFT 12, qui reçoit un signal à modulation de phase IF pour effectuer une démodulation numérique synchrone du signal à modulation de phase. Cette unité à transformée de Fourier discrète 12 permet d'effectuer aussi bien les opérations de mélange et de filtrage passe-bas grâce aux propriétés de filtrage et d'orthogonalité de la transformée de Fourier discrète. Ladite unité à transformée de Fourier discrète 12 comprend un noyau 13, par lequel l'opération de mélange est effectuée avec le signal à modulation de phase IF reçu et échantillonné dans l'unité à transformée de Fourier discrète. Le noyau 13 de l'unité à transformée de Fourier discrète 12 comprend une mémoire avec une table de consultation avec différents signaux numériques de conversion à différentes fréquences, qui sont des signaux numériques cosinus et/ou sinus sélectivement adressables pour l'opération de mélange avec le signal à modulation de phase IF échantillonné. Ce mélange permet de retirer la fréquence porteuse du signal à modulation de phase et de fournir au moins un signal démodulé en sortie.

Lors de la transformée de Fourier discrète, un filtrage passe-bas d'au moins un signal démodulé est effectué par l'intermédiaire du noyau 13 au moyen d'une fenêtre temporelle d'échantillonnage de durée définie. Ce filtrage se présente donc sous la forme d'un sinc(f) après un fenêtrage basé sur une fréquence unique de la transformée de Fourier discrète. Plus la durée de la fenêtre temporelle déterminée pour effectuer le filtrage est grande, et plus la fréquence de coupure du filtrage passe-bas est basse, et inversement pour une durée de la fenêtre temporelle plus petite. Avec une transformée de Fourier discrète à une seule fréquence, qui correspond à la fréquence porteuse du signal à modulation de phase, le filtrage passe-bas numérique est simplifié.

La fréquence des signaux cosinus et/ou sinus sélectionnés du noyau 13 de l'unité à transformée de Fourier discrète 12, n'est généralement pas directement égale à la fréquence porteuse du signal à modulation de phase IF pour l'opération de mélange dans le noyau 13. Une reconstruction de cette fréquence porteuse doit être effectuée dans le circuit électronique 1. Cette fréquence porteuse doit être adaptée dans une boucle d'asservissement du circuit électronique par des moyens de reconstruction de fréquence porteuse 16, 17, 18, ainsi que la phase. Cette boucle d'asservissement peut être une boucle numérique de Costas.

Le circuit électronique 1 comprend dans la boucle d'asservissement une unité d'extraction de fréquence et/ou de phase 16, qui peut être un comparateur de phase 16. Ce comparateur de phase 16 reçoit au moins un signal démodulé de l'unité à transformée de Fourier discrète 12. Le signal démodulé représente directement une information de la phase, donc des données exploitables sans traitement subséquent. Ce comparateur de phase peut donc être considéré comme un extracteur de fréquence et/ou de phase. Si une erreur de phase subsiste dans le signal démodulé, une information de l'erreur de phase est fournie à travers un filtre de boucle 17 à un accumulateur de phase 18. Cet accumulateur de phase peut directement adresser le noyau 13 de l'unité à transformée de Fourier discrète 12 comme un incrément de phase, afin de sélectionner des signaux cosinus et/ou sinus à fréquence adaptée selon l'incrément de phase. Une adaptation de phase et fréquence est effectuée numériquement jusqu'à un verrouillage de phase, comme un verrouillage de fréquence dans la boucle numérique de Costas.

La combinaison de cet accumulateur de phase 18 et du noyau 13 peut être considérée comme équivalent à un oscillateur traditionnel comme l'oscillateur commandé en tension représenté à la figure 3 du circuit électronique à démodulation analogique d'un signal à modulation de phase. Cependant la démodulation dans le circuit électronique de la présente invention est effectuée numériquement par l'intermédiaire de l'unité à transformée de Fourier discrète 12.

Le circuit électronique 1 de la présente invention peut être configuré pour démoduler numériquement de manière synchrone un signal à modulation de phase du type BPSK, mais aussi un signal à modulation de phase du type QPSK ou OQPSK comme représenté à la figure 4. Dans ce cas de figure, un premier signal démodulé en phase I_{OUT} et un second signal démodulé en quadrature Q_{OUT} sont fournis en sortie de l'unité à transformée de Fourier discrète 12. Le premier signal démodulé en phase I_{OUT} est obtenu par des opérations de mélange et filtrage passe-bas du signal à modulation de phase IF et d'un signal cosinus adressé du noyau 13 dans l'unité à transformée de Fourier discrète 12. Le second signal démodulé en quadrature Q_{OUT} est obtenu par des opérations de mélange et filtrage passe-bas du signal à modulation de phase IF et d'un signal sinus adressé du noyau 13 dans l'unité à transformée de Fourier discrète 12. Le comparateur de phase 16 peut ainsi comparer les premier et second signaux démodulés I_{OUT} et Q_{OUT}. Une erreur de phase est fournie à l'accumulateur de phase 18 par l'intermédiaire du filtre de boucle 17. Un incrément de phase correspondant à l'erreur de phase du comparateur de phase 16 est fourni au noyau 13 de l'unité 12 pour adresser le noyau 13 pour sélectionner un signal cosinus et un signal sinus à fréquence corrigée.

Pour les opérations numériques de mélange et filtrage passe-bas, il est effectué une transformée de Fourier discrète dite glissante. La fenêtre temporelle de durée T est successivement décalée dans le temps à chaque durée de décalage t, où la durée t est plus petite que la durée T, notamment au moins 4 fois inférieure. Cela peut également dépendre de la fréquence d'échantillonnage des signaux dans l'unité à transformée de Fourier discrète 12, qui est générée par un signal de cadencement d'un étage oscillateur, qui peut être externe à ladite unité 12. Cette fréquence d'échantillonnage doit au moins être le double de la fréquence porteuse et de préférence au moins quatre fois supérieure. Par exemple pour une fréquence porteuse à 400 kHz, il faut une fréquence d'échantillonnage au moins supérieure à 800 kHz.

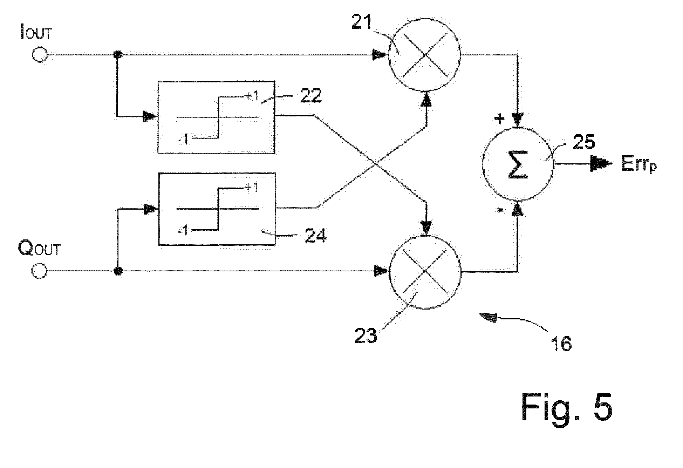

Pour effectuer la comparaison des signaux démodulés en phase I_{OUT} et en quadrature Q_{OUT}, il peut être utilisé un comparateur de phase 16 comme représenté à la figure 5. Ce comparateur de phase 16 comprend un premier multiplicateur 21 recevant à une première entrée le signal démodulé en phase I_{OUT} et un second multiplicateur 23 recevant à une première entrée le signal démodulé en quadrature Q_{OUT}. Le signal démodulé en phase I_{OUT} est relié à un premier indicateur de signe 22, et le signal démodulé en quadrature Q_{OUT} est relié à un second indicateur de signe 24. La sortie du premier indicateur de signe 22 est fournie à une seconde entrée du second multiplicateur 23, alors que la sortie du second indicateur de signe 24 est fournie à une seconde entrée du premier multiplicateur 21.

Les premier et second indicateurs de signe 22 et 24 sont prévus pour fournir le signe des signaux démodulés en phase I_{OUT} et en quadrature Q_{OUT}. Lorsque le signal démodulé définit dans le temps un état haut, c'est-à-dire un état logique "1 ", le signe à la sortie de l'indicateur est positif +1. Lorsque le signal démodulé définit dans le temps un état bas, c'est-à-dire un état logique "0", le signe à la sortie de l'indicateur est négatif -1.

Le premier multiplicateur 21 a pour but de changer le signe du signal démodulé en phase I_{OUT}, si le second indicateur 24 fournit un signe négatif, et le second multiplicateur 23 a pour but de changer le signe du signal démodulé en quadrature Q_{OUT}, si le premier indicateur 22 fournit un signe négatif. Aucun changement de signe n'est effectué si les premier et second indicateurs de signe 22, 24 fournissent un signe positif au multiplicateur correspondant 21, 23.

Dans le comparateur de phase 16, la sortie du premier multiplicateur 21 est reliée à une entrée positive d'un additionneur 25 et la sortie du second multiplicateur 23 est reliée à une entrée négative de l'additionneur 25. L'additionneur fournit un signal d'erreur de phase Errₚ dans la boucle numérique de Costas suite à la comparaison du signal démodulé en phase I_{OUT} et du signal démodulé en quadrature Q_{OUT}.

Comme montré en figure 2 décrit ci-devant, l'erreur de phase Φ peut varier à chaque transformée de Fourier discrète glissante, si la fréquence de l'oscillateur local n'a pas été corrigée. En fonction de la comparaison des signaux démodulés en phase I_{OUT} et en quadrature Q_{OUT} dans le comparateur de phase 16, l'accumulateur de phase va adresser le noyau de l'unité à transformée de Fourier pour adapter la fréquence porteuse et la phase. Cette adaptation est effectuée successivement jusqu'à ce que la fréquence porteuse ait été reconstruite pour avoir un verrouillage de phase et de fréquence dans la boucle numérique de Costas.

A partir de la description qui vient d'être faite, plusieurs variantes de réalisation du circuit électronique à démodulateur synchrone d'un signal à modulation de phase peuvent être conçues par l'homme du métier sans sortir du cadre de l'invention définie par les revendications. Le circuit électronique à démodulateur synchrone peut être prévu pour démoduler un signal à modulation de phase à 3 bits ou plus. Le signal à modulation de phase fourni au circuit électronique, peut avoir subi une première conversion de fréquence dans des mélangeurs préalables d'un récepteur dans lequel est placé le circuit électronique.

## Revendications

1. Circuit électronique (1) à démodulateur synchrone d'un signal à modulation de phase (IF), le circuit électronique (1) comprenant, dans une boucle d'asservissement, une unité à transformée de Fourier discrète (12) pour recevoir le signal à modulation de phase (IF) à démoduler, et des moyens (16, 17, 18) pour reconstruire la fréquence porteuse du signal à modulation de phase (IF), afin que l'unité à transformée de Fourier discrète (12) effectue en combinaison les opérations de mélange et filtrage passe-bas du signal à modulation de phase (IF) échantillonné avec au moins un signal numérique de conversion adapté en phase et en fréquence pour la fourniture d'au moins un signal démodulé (I_{OUT}) en sortie de l'unité à transformée de Fourier discrète (12).

2. Circuit électronique (1) selon la revendication 1, **caractérisé en ce que** les moyens (16, 17, 18) pour reconstruire la fréquence porteuse du signal à modulation de phase (IF), comprennent une unité d'extraction de fréquence et/ou de phase (16) recevant au moins un signal démodulé (I_{OUT}) en sortie de l'unité à transformée de Fourier discrète (12), un filtre de boucle (17) lié à la sortie de l'unité d'extraction de fréquence et/ou de phase (16), et un accumulateur de phase (18) lié à la sortie du filtre de boucle (17), pour commander l'adaptation de fréquence porteuse dans l'unité à transformée de Fourier discrète (12).

3. Circuit électronique (1) selon la revendication 2, **caractérisé en ce que** l'unité d'extraction de fréquence et/ou de phase est un comparateur de phase (16).

4. Circuit électronique (1) selon la revendication 2, **caractérisé en ce que** l'unité à transformée de Fourier discrète (12) comprend un noyau (13) muni d'une mémoire avec une table de consultation avec différents signaux numériques de conversion à différentes fréquences, qui sont des signaux numériques cosinus et/ou sinus, chaque signal numérique de conversion de la mémoire étant sélectivement adressable par l'accumulateur de phase (18) pour l'opération de mélange avec le signal à modulation de phase (IF) échantillonné.

5. Circuit électronique (1) selon la revendication 1, **caractérisé en ce que** l'unité à transformée de Fourier discrète (12) effectue le filtrage passe-bas numérique au moyen d'une fenêtre temporelle d'échantillonnage de durée définie pour la transformée de Fourier discrète.

6. Circuit électronique (1) selon la revendication 5, **caractérisé en ce que** l'unité à transformée de Fourier discrète (12) effectue une transformée de Fourier glissante à une seule fréquence correspondant à la fréquence porteuse du signal à modulation de phase (IF).

7. Circuit électronique (1) selon la revendication 3, **caractérisé en ce que** l'unité à transformée de Fourier discrète (12) est adaptée pour fournir un signal démodulé en phase (I_{OUT}) et un signal démodulé en quadrature (Q_{OUT}) sur la base d'un signal à modulation de phase (IF) du type QPSK ou OQPSK.

8. Circuit électronique (1) selon la revendication 7, **caractérisé en ce que** le comparateur de phase (16) permet de comparer le signal démodulé en phase (I_{OUT}) et le signal démodulé en quadrature (Q_{OUT}) pour fournir un signal d'erreur (Errₚ) au filtre de boucle (17) et à l'accumulateur de phase (18).

9. Circuit électronique (1) selon la revendication 8, **caractérisé en ce que** le comparateur de phase (16) comprend un premier multiplicateur (21) recevant à une première entrée le signal démodulé en phase (I_{OUT}), qui est fourni à un premier indicateur de signe (22), un second multiplicateur (23) recevant à une première entrée le signal démodulé en quadrature (Q_{OUT}), qui est fourni à un second indicateur de signe (24), une sortie du premier indicateur de signe (22) étant fournie à une seconde entrée du second multiplicateur (23) afin de changer de signe le signal démodulé en quadrature (Q_{OUT}) en fonction de l'état de sortie du premier indicateur de signe (22), alors qu'une sortie du second indicateur de signe (24) est fournie à une seconde entrée du premier multiplicateur (21) afin de changer de signe le signal démodulé en phase (I_{OUT}) en fonction de l'état de sortie du second indicateur de signe (24), et **en ce qu'**une sortie du premier multiplicateur (21) est reliée à une entrée positive d'un additionneur (25), alors qu'une sortie du second multiplicateur (23) est reliée à une entrée négative de l'additionneur (25), qui fournit un signal d'erreur de phase (Errₚ).

## Patentansprüche

1. Elektronische Schaltung (1) mit synchronem Demodulator für ein phasenmoduliertes Signal (IF), wobei die elektronische Schaltung (1) Folgendes umfasst: in einem Regelkreis eine Einheit (12) zur diskreten Fourier-Transformation, um das zu demodulierende phasenmodulierte Signal (IF) zu empfangen, und Mittel (16, 17, 18), um die Trägerfrequenz des phasenmodulierten Signals (IF) wiederherzustellen, damit die Einheit (12) zur diskreten Fourier-Transformation in Kombination die Operationen des Mischens und Tiefpassfilterns des phasenmodulierten Signals (IF) ausführt, das mit wenigstens einem digitalen Umsetzungssignal abgetastet wird, das hinsichtlich Phase und Frequenz angepasst ist, um wenigstens ein demoduliertes Signal (I_{OUT}) am Ausgang der Einheit (12) zur diskreten Fourier-Transformation zu liefern.

2. Elektronische Schaltung (1) nach Anspruch 1, **dadurch gekennzeichnet, dass** die Mittel (16, 17, 18) zum Wiedergewinnen der Trägerfrequenz des phasenmodulierten Signals (IF) eine Einheit (16) zum Extrahieren der Frequenz und/oder der Phase, die wenigstens ein demoduliertes Signal (I_{OUT}) am Ausgang der Einheit (12) zur diskreten Fourier-Transformation empfängt, ein Schleifenfilter (17), das mit dem Ausgang der Frequenz- und/oder Phasenextraktionseinheit (16) verbunden ist, und einen Phasenakkumulator (18), der mit dem Ausgang des Schleifenfilters (17) verbunden ist, umfassen, um die Anpassung der Trägerfrequenz in der Einheit (12) zur diskreten Fourier-Transformation zu steuern.

3. Elektronische Schaltung (1) nach Anspruch 2, **dadurch gekennzeichnet, dass** die Frequenz- und/oder Phasen-Extraktionseinheit ein Phasenkomparator (16) ist.

4. Elektronische Schaltung (1) nach Anspruch 2, **dadurch gekennzeichnet, dass** die Einheit (12) zur diskreten Fourier-Transformation einen Kern (13) umfasst, der mit einem Speicher versehen ist, der eine Nachschlagtabelle mit unterschiedlichen digitalen Umsetzungssignalen mit unterschiedlichen Frequenzen enthält, die digitale Kosinus- und/oder Sinussignale sind, wobei jedes digitale Umsetzungssignal des Speichers durch den Phasenakkumulator (18) für das Mischen mit dem abgetasteten phasenmodulierten Signal (IF) selektiv adressierbar ist.

5. Elektronische Schaltung (1) nach Anspruch 1, **dadurch gekennzeichnet, dass** die Einheit (12) zur diskreten Fourier-Transformation die digitale Tiefpassfilterung mittels eines Abtast-Zeitfensters mit einer für die diskrete Fourier-Transformation definierten Dauer ausführt.

6. Elektronische Schaltung (1) nach Anspruch 5, **dadurch gekennzeichnet, dass** die Einheit (12) zur diskreten Fourier-Transformation eine gleitende Fourier-Transformation mit einer einzigen Frequenz, die der Trägerfrequenz des phasenmodulierten Signals (IF) entspricht, ausführt.

7. Elektronische Schaltung (1) nach Anspruch 3, **dadurch gekennzeichnet, dass** die Einheit (12) zur diskreten Fourier-Transformation dafür ausgelegt ist, ein demoduliertes Inphasesignal (I_{OUT}) und ein demoduliertes Quadratursignal (Q_{OUT}) anhand eines phasenmodulierten Signals (IF) des Typs QPSK oder OQPSK zu liefern.

8. Elektronische Schaltung (1) nach Anspruch 7, **dadurch gekennzeichnet, dass** der Phasenkomparator (16) ermöglicht, das demodulierte Inphasesignal (I_{OUT}) und das demodulierte Quadratursignal (Q_{OUT}) zu vergleichen, um ein Fehlersignal (Errp) an das Schleifenfilter (17) und den Phasenakkumulator (18) zu liefern.

9. Elektronische Schaltung (1) nach Anspruch 8, **dadurch gekennzeichnet, dass** der Phasenkomparator (16) einen ersten Multiplizierer (21), der an einem ersten Eingang das demodulierte Inphasesignal (I_{OUT}) empfängt, das an einen ersten Vorzeichenindikator (22) geliefert wird, und einen zweiten Multiplizierer (23), der an einem ersten Eingang das demodulierte Quadratursignal (Q_{OUT}) empfängt, das an einen zweiten Vorzeichenindikator (24) geliefert wird, umfasst, wobei ein Ausgang des ersten Vorzeichenindikators (22) an einen zweiten Eingang des zweiten Multiplizierers (23) geliefert wird, um das Vorzeichen des demodulierten Quadratursignals (Q_{OUT}) als Funktion des Zustands des Ausgangs des ersten Vorzeichenindikators (22) zu ändern, während ein Ausgang des zweiten Vorzeichenindikators (24) an einen zweiten Eingang des ersten Multiplizierers (21) geliefert wird, um das Vorzeichen des demodulierten Inphasesignals (I_{OUT}) als Funktion des Zustands des Ausgangs des zweiten Vorzeichenindikators (24) zu ändern, und dass ein Ausgang des ersten Multiplizierers (21) mit einem positiven Eingang eines Addierers (25) verbunden ist, während ein Ausgang des zweiten Multiplizierers (23) mit einem negativen Eingang des Addierers (25) verbunden ist, der ein Phasenfehlersignal (Errₚ) liefert.

## Claims

1. Synchronous demodulator electronic circuit (1) for phase modulation signals (IF), the electronic circuit (1) including, in a control loop, a discrete Fourier transform unit (12) for receiving the phase modulation signal (IF) to be demodulated, and means (16, 17, 18) of recovering the carrier frequency of the phase modulation signal (IF), so that the discrete Fourier transform unit (12) performs in combination the operations of mixing and low-pass filtering the sampled phase modulation signal (IF) with at least one frequency and phase adapted digital conversion signal to supply at least one demodulated signal (I_{OUT}) at the output of the discrete Fourier transform unit (12).

2. Electronic circuit (1) according to claim 1, **characterized in that** the means (16, 17, 18) of recovering the carrier frequency of the phase modulation signal (IF) include a frequency and/or phase extraction unit (16) receiving at least one demodulated signal (I_{OUT}) at the output of the discrete Fourier transform unit (12), a loop filter (17) connected to the output of the frequency and/or phase extraction unit (16), and a phase accumulator (18) connected to the output of the loop filter (17), to control the carrier frequency adaptation in the discrete Fourier transform unit (12).

3. Electronic circuit (1) according to claim 2, **characterized in that** the frequency and/or phase extraction unit is a phase comparator (16).

4. Electronic circuit (1) according to claim 2, **characterized in that** the discrete Fourier transform unit (12) includes a core (13) provided with a memory with a look-up table with various different digital conversion signals at different frequencies, which are digital cosine and/or sine signals, each digital conversion signal of the memory being selectively addressable by the phase accumulator (18) for the mixing operation with the sampled phase modulation signal (IF).

5. Electronic circuit (1) according to claim 1, **characterized in that** the discrete Fourier transform unit (12) performs digital low-pass filtering by means of a temporal sampling window of defined duration for the discrete Fourier transform.

6. Electronic circuit (1) according to claim 5, **characterized in that** the discrete Fourier transform unit (12) performs a sliding Fourier transform at a single frequency corresponding to the carrier frequency of the phase modulation signal (IF).

7. Electronic circuit (1) according to claim 3, **characterized in that** the discrete Fourier transform unit (12) is adapted to provide a demodulated in-phase signal (I_{OUT}) and a demodulated quadrature signal (Q_{OUT}) on the basis of a QPSK or OQPSK modulation signal (IF).

8. Electronic circuit (1) according to claim 7, **characterized in that** the phase comparator (16) enables the demodulated in-phase signal (I_{OUT}) and demodulated quadrature signal (Q_{OUT}) to be compared to provide an error signal (Errp) to the loop filter (17) and to the phase accumulator (18).

9. Electronic circuit (1) according to claim 8, **characterized in that** the phase comparator (16) includes a first multiplier (21) receiving at a first input the demodulated in-phase signal (I_{OUT}), which is supplied to a first sign indicator (22), a second multiplier (23) receiving at a first input the demodulated quadrature signal (Q_{OUT}), which is supplied to a second sign indicator (24), an output of the first sign indicator (22) being supplied to a second input of the second multiplier (23) in order to change the sign of the demodulated quadrature signal (Q_{OUT}) according to the output state of the first sign indicator (22), whereas an output of the second sign indicator (24) is supplied to a second input of the first multiplier (21) so as to change the sign of the demodulated in-phase signal (I_{OUT}) according to the output state of the second sign indicator (24), and **in that** an output of the first multiplier (21) is connected to a positive input of an adder (25), whereas an output of the second multiplier (23) is connected to a negative input of the adder (25), which supplies a phase error signal (Errp).
